(19) Europäisches Patentamt

European Patent Office

Office européen des brevets

(11) **EP 2 347 104 B1**

(12) **FASCICULE DE BREVET EUROPEEN**

(45) Date de publication et mention
de la délivrance du brevet:
**09.01.2013 Bulletin 2013/02**

(21) Numéro de dépôt: **09752787.3**

(22) Date de dépôt: **05.11.2009**

(51) Int Cl.:
*F01N 3/20* $^{(2006.01)}$      *F01N 11/00* $^{(2006.01)}$

(86) Numéro de dépôt international:
**PCT/EP2009/064667**

(87) Numéro de publication internationale:
**WO 2010/052261 (14.05.2010 Gazette 2010/19)**

(54) **PROCEDE DE DIAGNOSTIC DES PERFORMANCES D'UN POT CATALYTIQUE**

VERFAHREN ZUR DIAGOSTIZIERUNG DER LEISTUNG EINES KATALYSATORS

METHOD FOR DIAGNOSING THE PERFORMANCE OF A CATALYTIC CONVERTER

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **06.11.2008 FR 0806209**

(43) Date de publication de la demande:
**27.07.2011 Bulletin 2011/30**

(73) Titulaire: **Valeo Systèmes de Contrôle Moteur
95892 Cergy Pontoise (FR)**

(72) Inventeurs:
• **SERRA, Bruno**
**F-91150 Etampes (FR)**
• **FOURET, Rémi**
**F-92230 Gennevilliers (FR)**

(56) Documents cités:
**EP-A- 1 471 220     WO-A-01/49993
JP-A- 8 177 469**

## Description

Le domaine de l'invention est celui des pots catalytiques des véhicules automobiles à essence et plus particulièrement du diagnostic embarqué de ces pots.

Un pot catalytique est un organe qui est monté sur la ligne d'échappement du moteur du véhicule, en amont d'un silencieux. C'est un filtre destiné à réduire les émissions de gaz polluants (HC, CO, NOx...). Plus particulièrement, il s'agit d'un pain de céramique comportant des canaux revêtus intérieurement d'un catalyseur et que traversent les gaz d'échappement.

Depuis un certain temps déjà, les administrations, notamment celles de l'Union Européenne, ont édicté des normes qui ont contraint les constructeurs à monter des pots catalytiques de plus en plus performants et à offrir un service de diagnostic embarqué des performances des pots au cours de leur vieillissement.

Un tel procédé de diagnostic des performances d'un pot catalytic est connu du JP 08 177 469 A.

On a commencé par proposer un procédé de diagnostic dit passif, dans la mesure où il s'agit d'observer, sans intervenir. On utilise à cet effet un système à deux sondes à oxygène placées respectivement dans la tuyauterie d'échappement en amont et en aval du pot catalytique. En pratique, on n'observe que le signal de la sonde aval. Les sondes à oxygène mesurent la tension électrique engendrée par le déplacement des ions d'oxygène présents dans les gaz d'échappement.

Le signal de la sonde amont a une allure de sinusoïde, à l'image de la régulation de richesse du mélange admis par le moteur, qui oscille en alternant les phases riches et les phases pauvres. Cette alternance permet d'avoir une conversion optimale des gaz d'échappement par le pot catalytique.

Au début de son utilisation, à l'état neuf du pot, le signal de la sonde aval est un signal quasiment plat. Au fur et à mesure du vieillissement du pot catalytique, le signal de la sonde aval se perturbe, varie et s'amplifie progressivement pour prendre une forme également sinusoïdale. En fin de vie du pot catalytique, le catalyseur n'agissant plus, le signal post-catalytique de la sonde aval est quasiment identique à celui de la sonde amont, seulement décalé dans le temps de l'intervalle qui est nécessaire aux gaz pour transiter de l'une à l'autre des deux sondes.

Le diagnostic consiste à comparer le signal post-catalytique du pot diagnostiqué au signal post-catalytique d'un pot catalytique de référence.

Chaque évolution de la norme impose des seuils de détection de plus en plus faibles.

Le procédé de diagnostic passif n'est donc plus d'une précision suffisante pour satisfaire les critères de détection actuels. Comme la norme a évolué, le diagnostic a aussi évolué et le procédé de diagnostic passif a été délaissé au profit d'un procédé dit intrusif.

Selon le procédé intrusif, tout en continuant d'utiliser deux sondes à oxygène amont et aval, et dont on compare les signaux respectifs, on intervient dans le fonctionnement du moteur, d'où le qualificatif d'intrusif, en stimulant les sondes à oxygène avec un enchaînement de créneaux de richesse. Chaque stimulus consiste à injecter plus d'essence après que le moteur ait été stabilisé pendant une certaine période, par exemple de 3s. Le diagnostic intrusif est basé sur la mesure de la capacité de stockage d'oxygène (OSC).

En régime normal, le rapport

$$Cr = \cfrac{\cfrac{Air}{Carburant~réel}}{\cfrac{Air}{Carburant~stroechiométrique}}$$

est égal à 1.

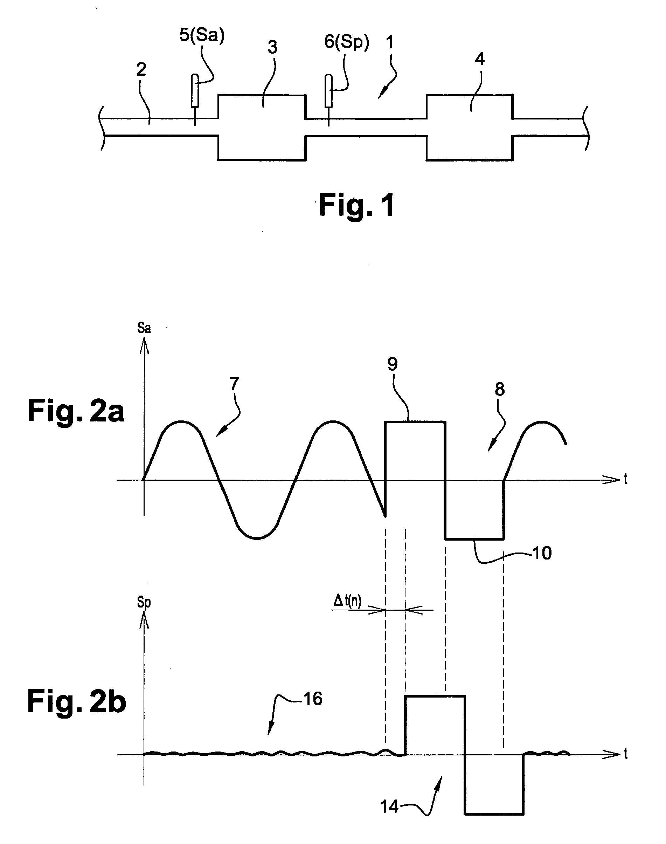

Le stimulus qu'on provoque est, dans le signal de la sonde amont Sa, un double créneau de richesse avec un premier créneau pauvre (excès d'air), avec un rapport Cr ici supérieur à 1, et un deuxième créneau riche (excès de carburant), avec un rapport Cr ici inférieur à 1, comme illustré sur la figure 2. Lorsque le pot catalytique est neuf, le signal post-catalytique Sp reproduit le double créneau de richesse pratiquement identique à celui du signal amont Sa, mais avec un décalage dans le temps de Δt (n).

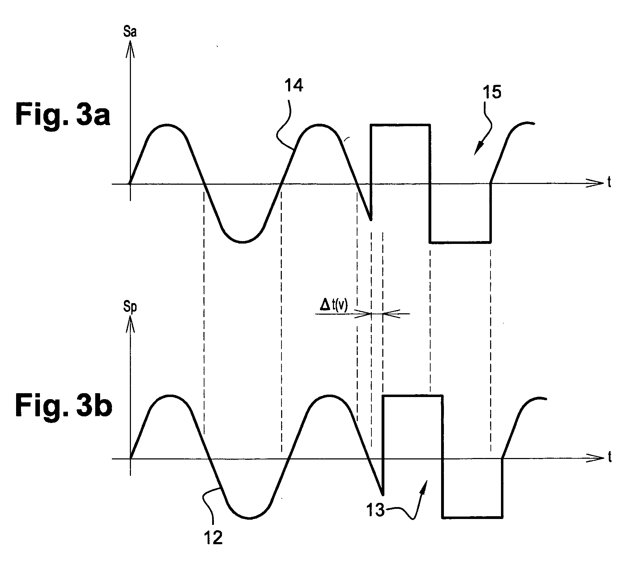

En fin de vie efficace du pot catalytique, alors que la portion du signal post-catalytique hors créneau de richesse devient également sinusoïdale, quasi identique à celle du signal amont Sa, le stimulus se traduit dans le signal post-catalytique Sp par un double créneau pratiquement identique à celui du signal amont Sa mais décalé dans le temps de Δt (v) beaucoup plus petit que Δt (n) (figure 3).

Comme les caractéristiques du double créneau peuvent être parfaitement maîtrisées par le logiciel de l'automate de diagnostic, au contraire des portions sinusoïdales des courbes des signaux Sa et Sp, le procédé de diagnostic intrusif est beaucoup plus précis que le diagnostic passif. Dès que Δt (n) atteint un seuil bas, on provoque une alerte.

La demanderesse a proposé son invention après avoir réalisé le côté paradoxal du diagnostic intrusif. Un pot catalytique a pour fonction de réduire les émanations de gaz polluants, Or les stimuli des diagnostics intrusifs, avec leurs phases d'enrichissement et d'appauvrissement, sont des causes de pollution et, ce, quelque soit l'état des pots catalytiques. Le paradoxe se manifeste d'ailleurs surtout quand les pots sont neufs et empêchent la pollution.

Et bien la demanderesse a osé braver la tendance qui veut de plus en plus de précisions pour revenir en arrière et proposer à nouveau un diagnostic passif pendant une première partie de la durée de vie des pots catalytiques pour, ensuite, satisfaire à nouveau les exigences normatives et repasser au-delà à un diagnostic intrusif pendant une deuxième partie de la durée de vie des pots catalytiques, la plus cruciale au plan de la pollution.

Au-delà du paradoxe mis en évidence et de l'audace d'un retour en arrière, la demanderesse a finalement fait preuve d'un simple bon sens en basant son invention sur le fait que les normes étant de plus en plus sévères, les constructeurs mettaient forcément sur le marché des pots catalytiques performants, au moins pendant un certain temps. Tout cela ne peut que constituer un gage d'activité inventive.

Ainsi l'invention concerne un procédé de diagnostic des performances d'un pot catalytique de véhicule automobile à essence, à bord du véhicule, le pot étant monté sur la ligne d'échappement du véhicule, procédé dans lequel on place deux sondes à oxygène sur la ligne d'échappement respectivement en amont et en aval du pot, on analyse leurs signaux, et on compare le signal de la sonde aval à un seuil pour procéder à un diagnostic passif pendant une première période de la durée de vie du pot, au-delà de laquelle, pendant une dernière période de la durée de vie du pot, à l'aide des deux sondes et d'un automate de diagnostic, et par mesure de la capacité de stockage d'oxygène du pot, on procède à un diagnostic intrusif des performances du pot.

Avantageusement la transition entre le diagnostic passif et le diagnostic intrusif est prédéterminée par le franchissement d'un seuil bas par le décalage temporel entre les deux signaux des deux sondes, le seuil étant déterminé à volonté car non normé.

De préférence, le seuil de transition est déterminé par un niveau d'émission d'une norme en vigueur, par exemple Euro 5.

En référence à la figure 1, qui représente schématiquement une ligne d'échappement d'un moteur de véhicule automobile à essence, la ligne d'échappement 1 du véhicule automobile comprend, sur la tuyauterie 2, un pot catalytique 3 et, en aval du pot 3, un silencieux 4. Deux sondes à oxygène 5, 6 sont placées sur la tuyauterie 2 respectivement en amont (5) et en aval (6) du pot 3. La sonde aval 6 (Sp) est une sonde post-catalytique, la sonde amont 5 (Sa), une sonde pré-catalytique. La figure 2 correspond aux signaux des sondes Sa et Sp associées à un pot catalytique pratiquement neuf. On a représenté, sur la figure 2, le signal de la sonde pré-catalytique (Sa) 5 en phase de diagnostic intrusif. Avant le stimulus, le signal est une sinusoïde classique 7 constituée d'alternances d'état riche et d'état pauvre. Le stimulus 8 est illustré par un créneau à un état haut 9 suivi d'un créneau à un état bas 10. Après le stimulus, la courbe reprend sa forme sinusoïdale. Sur la figure 2b, la courbe 16 du signal de la sonde post-catalytique (Sp) 6, avant et après le stimulus 11, est pratiquement plate. Les créneaux de stimulus 11 du signal de la sonde post-catalytique 6 sont quasiment les mêmes que ceux du signal de la sonde 5, mais décalés de Δt (n). Les figures 3a, 3b représentent les signaux des deux sondes 5 (5a), 6 (Sp) mais le pot catalytique 3 étant déjà usagé.
Les courbes de ces figures se distinguent de celles des figures 2a, 2b par :

- 1) avant et après le stimulus, la courbe du signal de la sonde post-catalytique 6 est une sinusoïde pratiquement identique à celle de la courbe du signal de la sonde pré-catalytique 5,
- 2) les créneaux de stimulus 13 de la courbe 12 du signal 15 de la sonde 6 sont décalés par rapport à ceux de la courbe 14 du signal de la sonde 5 de Δt (v), beaucoup plus petit que Δt (n).

## Revendications

1. Procédé de diagnostic des performances d'un pot catalytique (3) de véhicule automobile à essence, à bord du véhicule, le pot catalytique étant monté sur la ligne d'échappement (1) du véhicule, procédé dans lequel on place deux sondes à oxygène (5, 6) sur la ligne d'échappement (1) respectivement en amont et en aval du pot (3), on analyse leurs signaux (7, 16) et on compare le signal (16) de la sonde aval (6) à un seuil pour procéder à un diagnostic passif pendant une première période de la durée de vie du pot (3), au-delà de laquelle, pendant une dernière période de la durée de vie du pot (3), à l'aide des deux sondes (5, 6) et d'un automate de diagnostic et, par mesure de la capacité de stockage d'oxygène du pot (3), on procède à un diagnostic intrusif des performances du pot (3).

2. Procédé de diagnostic selon la revendication 1, dans lequel la transition entre le diagnostic passif et le diagnostic intrusif est prédéterminée par le franchissement d'un seuil bas par le décalage temporel entre les deux signaux (7, 16) des deux sondes (5, 6).

3. Procédé de diagnostic selon la revendication 2, dans lequel le seuil de transition est déterminé par un niveau d'émission d'une norme en vigueur.

## Claims

1. Method for diagnosing the performance of a catalytic converter (3) of a gasoline-fuelled motor vehicle, on board the vehicle, the catalytic converter being mounted on the exhaust line (1) of the vehicle, wherein two oxygen probes (5, 6) are placed on the exhaust line (1) respectively upstream and downstream of the converter (3), their signals (7, 16) are analyzed and the signal (16) of the downstream probe (6) is compared with a threshold in order to carry out a passive diagnosis during a first period of the service life of the converter (3), beyond which, during a last period of the service life of the converter (3), with the aid of the two probes (5, 6) and of a diagnostic programmable controller and by measuring the oxygen-storage capacity of the converter (3), an intrusive diagnosis of the performance of the converter (3) is carried out.

2. Diagnostic method according to Claim 1, in which the transition between the passive diagnosis and the intrusive diagnosis is predetermined by the crossing of a low threshold by the time shift between the two signals (7, 16) of the two probes (5, 6).

3. Diagnostic method according to Claim 2, wherein the transition threshold is determined by an emission level of a standard in force.

**Patentansprüche**

1. Verfahren zur Diagnose der Leistungen eines Katalysators (3) eines Benzinfahrzeugs an Bord des Fahrzeugs, wobei der Katalysator auf die Auspuffanlage (1) des Fahrzeugs montiert ist, Verfahren, bei dem zwei Sauerstoffsonden (5, 6) auf der Auspuffanlage (1) vor bzw. hinter dem Katalysator (3) angeordnet werden, ihre Signale (7, 16) analysiert werden, und das Signal (16) der hinteren Sonde (6) mit einer Schwelle verglichen wird, um während einer ersten Periode der Lebensdauer des Katalysators (3) eine passive Diagnose durchzuführen, über die hinaus während einer letzten Periode der Lebensdauer des Katalysators (3) mit Hilfe der zwei Sonden (5, 6) und eines Diagnoseautomaten und durch Messung der Sauerstoff-Speicherkapazität des Katalysators (3) eine intrusive Diagnose der Leistungen des Katalysators (3) durchgeführt wird.

2. Diagnoseverfahren nach Anspruch 1, bei dem der Übergang zwischen der passiven Diagnose und der intrusiven Diagnose durch die Überschreitung einer unteren Schwelle durch die Zeitverschiebung zwischen den zwei Signalen (7, 16) der zwei Sonden (5, 6) vorbestimmt wird.

3. Diagnoseverfahren nach Anspruch 2, bei dem die Übergangsschwelle durch einen Emissionspegel einer geltenden Norm bestimmt wird.

**Fig. 1**

**Fig. 2a**

**Fig. 2b**

Fig. 3a

Fig. 3b

**EP 2 347 104 B1**

## RÉFÉRENCES CITÉES DANS LA DESCRIPTION

**Documents brevets cités dans la description**

- JP 08177469 A